# EUROPEAN PATENT APPLICATION

(11) **EP 4 756 589 A1**
(43) Date of publication of application: **10.06.2026**
(21) Application number: 24847854.7
(22) Date of filing: 21.06.2024
(51) Int. Cl.: G06F 3/0481

(54) **INFORMATION PRESENTATION METHOD AND APPARATUS, AND DEVICE AND STORAGE MEDIUM**

(30) Priority: 28.07.2023 CN 202310946982
(71) Applicant: Beijing Zitiao Network Technology Co., Ltd., Beijing 100190 (CN)
(72) Inventor: LIU, Fujia, Beijing 100028 (CN); WANG, Xin, Beijing 100028 (CN)
(74) Representative: Grünecker Patent- und Rechtsanwälte PartG mbB
(86) International application number: PCT/CN2024/100723
(87) International publication number: WO 2025/025892

(57) **Abstract**

Provided in the present disclosure are an information presentation method and apparatus, and a device and a storage medium. The method comprises: displaying a preset interaction area for target media content, wherein the preset interaction area is configured to present and/or publish interaction information of the target media content, and presenting prompt information in the preset interaction area, wherein the prompt information is configured to give a prompt of publishing interaction information of a target media type associated with a target topic, and the target topic comprises an associated topic of the target media content and/or an associated topic of the interaction information of the target media content.

## Description

This application claims priority to Chinese Patent Application No. 202310946982.2, filed July 28, 2023, the disclosure of which is incorporated herein by reference in its entirety.

### TECHNICAL FIELD

Embodiments of the present disclosure relate to information presentation method, apparatus, device and storage medium.

### BACKGROUND

With the continuous development of Internet technology, users may browse various types of media content through the Internet, and interactions may be conducted between different users based on the media content.

### SUMMARY

Embodiments of the present disclosure provide information presentation method, apparatus, device and storage medium, which may optimize existing information presentation solutions.

In a first aspect, embodiments of the present disclosure provide an information presentation method, including: displaying a preset interaction area of a target media content, where the preset interaction area is configured to display and/or publish interaction information of the target media content; and presenting prompt information in the preset interaction area, where the prompt information is configured to prompt the publishing of interaction information of a target media type associated with a target topic, and the target topic includes an associated topic of the target media content and/or an associated topic of the interaction information of the target media content.

In a second aspect, embodiments of the present disclosure also provide an information presentation apparatus, including: an interaction area display module configured to display a preset interaction area of a target media content, where the preset interaction area is configured to display and/or publish interaction information of the target media content; and a prompt information presentation module configured to present prompt information in the preset interaction area, where the prompt information is configured to prompt the publishing of interaction information of a target media type associated with a target topic, and the target topic includes an associated topic of the target media content and/or an associated topic of the interaction information of the target media content.

In a third aspect, embodiments of the present disclosure also provide an electronic device, including: one or more processors; and a storage apparatus configured to store one or more programs, where when the one or more programs are executed by the one or more processors, the one or more processors are caused to implement the information presentation method of the present disclosure.

In a fourth aspect, embodiments of the present disclosure also provide a storage medium storing computer-executable instructions, where the computer-executable instructions, when executed by a computer processor, cause the computer processor to perform the information presentation method of the present disclosure.

The presentation display method provided by the embodiment of the present disclosure displays a preset interaction area of the target media content, where the preset interaction area is configured to display and/or publish interaction information of the target media content, and present prompt information in the preset interaction area, where the prompt information is configured to prompt the publishing of interaction information of a target media type associated with a target topic, and the target topic includes an associated topic of the target media content and/or an associated topic of the interaction information of the target media content.

### BRIEF DESCRIPTION OF DRAWINGS

The above and other features, advantages and aspects of various embodiments of the present disclosure will become more apparent with reference to the following detailed description taken in conjunction with the accompanying drawings. Throughout the drawings, the same or similar reference numbers refer to the same or similar elements. It should be understood that the drawings are schematic and elements and elements are not necessarily drawn to scale.
Fig. 1 is a schematic flow chart of an information presentation method provided by an embodiment of the present disclosure;
Fig. 2 is a schematic diagram of an interface provided by an embodiment of the present disclosure;
Fig. 3 is a schematic flow chart of another information presentation method provided by an embodiment of the present disclosure;
Fig. 4 is a schematic diagram of interface interaction provided by an embodiment of the present disclosure;
Fig. 5 is a schematic diagram of another interface interaction provided by an embodiment of the present disclosure;
Fig. 6 is a schematic flow chart of yet another information presentation method provided by an embodiment of the present disclosure;
Fig. 7 is a schematic diagram of another interface interaction provided by an embodiment of the present disclosure;
Fig. 8 is a schematic structural diagram of an information presentation apparatus provided by an embodiment of the present disclosure; and
Fig. 9 is a schematic structural diagram of an electronic device provided by an embodiment of the present disclosure.

### DETAILED DESCRIPTION

The embodiments of the present disclosure will be described in more detail below with reference to the drawings. Although some embodiments of the present disclosure are shown in the drawings, it should be understood that the present disclosure may be implemented in various forms, and should not be construed as limited to the embodiments set forth herein. On the contrary, these embodiments are provided for a more thorough and complete understanding of the present disclosure. It should be understood that the drawings and embodiments of the present disclosure are only for exemplary purposes, and are not intended to limit the protection scope of the present disclosure.

It should be understood that various steps described in method implementations of the present disclosure may be performed in different orders and/or in parallel. In addition, the method implementations may include additional steps and/or omit the steps shown. The scope of the present disclosure is not limited in this respect.

The term "include/comprise" and its variants used herein are open-ended inclusions, that is, "include/comprise but not limited to". The term "based on" is "at least partially based on". The term "one embodiment" means "at least one embodiment"; the term "another embodiment" means "at least one another embodiment"; and the term "some embodiments" means "at least some embodiments". The relevant definitions of other terms will be given in the following description.

It should be noted that concepts such as "first" and "second" mentioned in the present disclosure are only used to distinguish different apparatuses, modules or units, and are not used to limit the order or interdependence of functions performed by these apparatuses, modules or units.

It should be noted that the modifiers "one" and "a plurality of" mentioned in the present disclosure are illustrative rather than restrictive, and those skilled in the art should understand that unless the context clearly indicates otherwise, they should be understood as "one or more".

The names of messages or information exchanged between a plurality of apparatuses in the implementations of the present disclosure are only for illustrative purposes, and are not intended to limit the scope of these messages or information.

It can be understood that, before using the technical solutions disclosed in the embodiments of the present disclosure, the user should be informed of the type, use scope, use scene, etc. of the personal information involved in the present disclosure through an appropriate manner according to relevant laws and regulations, and the authorization of the user should be obtained.

For example, in response to receiving an active request from the user, prompt information is sent to the user to explicitly prompt the user that the operation the user requested to be performed will require the acquisition and use of the user's personal information. In this way, the user may choose whether to provide personal information to software or hardware such as an electronic device, an application, a server or a storage medium that performs the operation of the technical solution of the present disclosure according to the prompt information.

As an optional but non-limiting implementation, in response to receiving the active request from the user, the prompt information is sent to the user for example in a pop-up window, and the prompt information may be presented in text in the pop-up window. In addition, the pop-up window may also carry a selection control for the user to select "agree" or "disagree" to provide personal information to the electronic device.

It can be understood that above process of notifying and acquiring the user's authorization is only illustrative and does not constitute a limitation on the implementations of the present disclosure, and other methods that meet relevant laws and regulations may also be applied to the implementations of the present disclosure.

It can be understood that the data involved in the technical solution (including but not limited to the data itself, the acquisition or use of the data) should comply with the requirements of corresponding laws, regulations and related provisions.

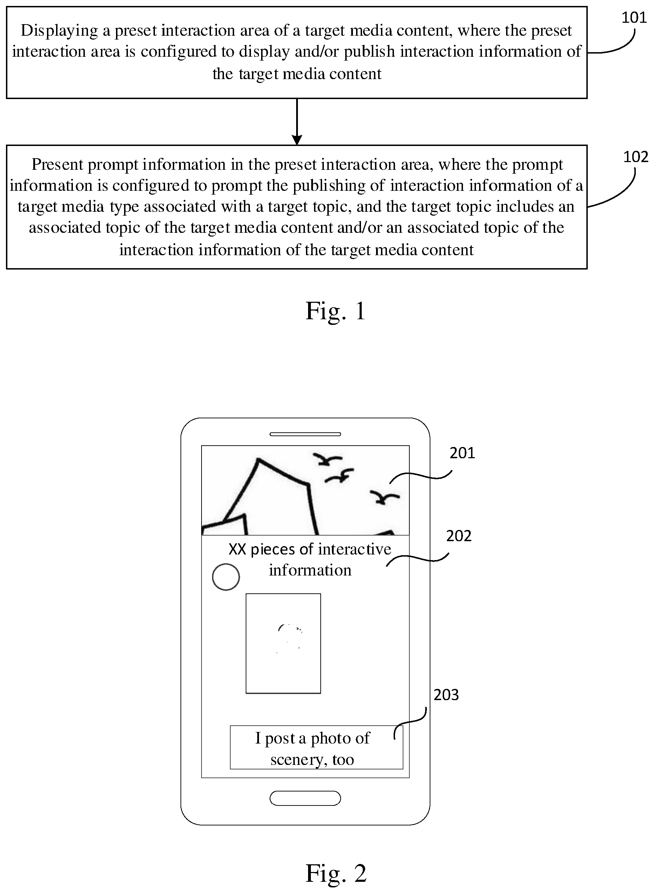

Fig. 1 is a schematic flowchart of an information presentation method provided by an embodiment of the present disclosure. The embodiment of the present disclosure is suitable for information presentation. The method may be executed by an information presentation apparatus, and the apparatus may be implemented in the form of software and/or hardware. Optionally, it may be implemented by an electronic device. The electronic device may be a mobile terminal such as a mobile phone, a smart watch, a tablet computer, and a personal digital assistant, or a device such as a Personal Computer (PC) or a server.

As shown in Fig. 1, the method includes:
Step 101: displaying a preset interaction area of a target media content, where the preset interaction area is configured to display and/or publish interaction information of the target media content.

Exemplarily, the media content may include image content, graphic content, video content or audio content, etc., and may specifically include picture works, graphic works, video works, musical works or live broadcast content. Optionally, the media content may be included in the media content stream. Optionally, the media content may be presented in a content presentation interface.

Exemplarily, the interaction information includes information related to the interaction of the media content, and the specific interaction method is not limited. For example, the interaction method may be that the user publishes a comment on the media content, that is, the interaction information may include comment information; For another example, the interaction method may be that the user publishes comments in response to media content comments, or it may be understood as comment information published in reply to the media content comments. That is, the interaction information may include comment reply information.

Exemplarily, the preset interaction area is configured to display and/or publish the interaction information of the target media content, and the current user may view the interaction information of the target media content published by himself or other users through the preset interaction area, and may also view the interaction information of the target media content using the preset interaction area. The interaction information of the target media content may also be published by the present interaction area. The preset interaction area may be included in the content presentation interface, or may be included in the first preset interface located at the upper layer of the content presentation interface, or may be included in the second preset interface entered after jumping from the content presentation interface., without specific limitation. The target media content may be any media content, for example, it may be the media content currently displayed in the content presentation interface, or the media content being displayed in the content presentation interface before entering the second preset interface.

Step 102: present prompt information in the preset interaction area, where the prompt information is configured to prompt the publishing of interaction information of a target media type associated with a target topic, and the target topic includes an associated topic of the target media content and/or an associated topic of the interaction information of the target media content.

Exemplarily, the interaction information may include information in one or more media forms. The media forms may include text, pictures (which may include static picture and dynamic picture), video, audio, etc. The media type of the interaction information may be determined according to the media form of the information included in the interaction information. The preset interaction area may be used to display and/or publish interaction information of at least two media types. Exemplarily, the media types may include a first media type, a second media type, a third media type, and a fourth media type. Where, the interaction information of the first media type includes pictures; The interaction information of the second media type includes video; The interaction information of the third media type includes audio; The interaction information of the fourth media type includes text, but does not include pictures, videos, and audios. Alternatively, the same interaction information may also include information in two or more forms of media, such as both text and pictures. Optionally, the interaction information of the first media type, the second media type and the third media type may also include text. Taking interaction information as the comment information as an example, the above four types of comment information may be recorded as picture comment, video comment, audio comment and text comment, respectively. Optionally, the target media type includes at least one of a first media type, a second media type, and a third media type.

Exemplarily, the associated topics of the target media content may include topics corresponding to content elements contained in the target media content, such as scenery, buildings or items contained in video works or picture works, then the associated topics may include scenery, buildings or items. The associated topics of the interaction information of the target media content may include topics corresponding to common elements of all or part of the published interaction information of the target media content. If more than a set number of comments contain coffee, the associated topics may include coffee. Optionally, the associated topic of the interaction information of the target media content includes the associated topic of the interaction information of the target media type of the target media content. For example, if the target media type is the above-mentioned first media type, and more than a set number of picture comments contain coffee, then the associated topic may include coffee. When users publish interaction information to a target media content, they generally publish interaction information related to the target media content. Through prompt information prompts, publishing interaction information of the target media type associated with the target subject may facilitate the current user to more quickly select the content related to the target media content. Content related to the target subject is used as the content of the interaction information. For example, if the target subject is "see coffee in your photo album", the user may select a photo containing coffee from the photo album as the interaction information of the target media type to be released about.

Exemplarily, the specific presentation form of the prompt information is not limited, and may include, for example, one or more of text information (which may include text, pictures, emoticons or animations, etc.), voice information, and control. The display position of the prompt information in the preset interaction area is not limited. For example, it may be a preset fixed position or a dynamically determined position.

Fig. 2 is a schematic diagram of an interface provided by an embodiment of the present disclosure. As shown in Fig. 2, a preset interaction area 202 of the target media content 201 is displayed. Assuming that the associated subject of the target media content is scenery, the prompt information 203 is present in the preset interaction area 202, for prompting the current user to publish interaction information for the target media type associated with the scenery subject of the target media content 201, such as prompting the current user to publish a picture comment associated with the scenery subject.

The information presentation method provided by the embodiment of the present disclosure displays a preset interaction area of the target media content, where the preset interaction area is configured to display and/or publish the interaction information of the target media content. When the target media content meets the preset condition, display the prompt information in the preset interaction area, where the prompt information is configured to prompt the release of interaction information of the target media type, and the target media type is associated with the preset condition. By adopting the above technical solutions, displaying publishing prompt information of a media type associated with a preset condition in a preset interactive area of media content that satisfies the preset condition can improve the interaction efficiency of users based on interactive information of the target media type.

In some embodiments, the displaying of the prompt information in the preset interactive area includes: displaying the prompt information in the preset interactive area when the target media content satisfies a preset condition. Thereby, the prompt information can be presented when the target media content meets certain conditions, improving the prompting effect.

Exemplarily, the preset condition corresponding to the target media content may be preset. If the target media content meets the preset condition, the prompt information is presented in the preset interaction area; If the target media content does not meet the preset condition, the prompt information may not be presented.

Optionally, the target media type is associated with a preset condition. Optionally, the preset condition may be determined according to the amount of interaction information of the target media type of the target media content. For example, the target media content satisfying the preset condition includes: the amount of interaction information of the target media type of the target media content is greater than a preset number threshold. For example, if the number of picture comments in the target media content is greater than a preset number threshold (such as 20), the current user may be prompted to post picture comments by displaying a prompt information. Therefore, when the amount of interaction information of the target media type of the target media content is large, it means that more users have participated in the interaction with the target media content by releasing the interaction information of the target media type, and the prompt information may be displayed. In this way, the current user is prompted to interact in this way, which is beneficial to strengthening the interaction between users.

Optionally, the preset condition may be determined based on the relationship between the associated information of the target media content and the target media type, and the associated information may include, for example, title information or description information, where the associated information is generally added by the publisher of the target media content when publishing the target media content. For example, the target media content satisfying the preset condition may include: the media content of the target associated information contains indication information of the target media type. If the title information is "Come and show a beautiful photo of the home town", then the indication information includes "Show... photos", taking comment information as an example, it may be determined that the target media type is picture comments.

In some embodiments, the prompt information includes at least one of the following: an interactive operation prompt, a target topic, and a preset control, where the preset control is configured to trigger the generation of the interactive information of the target media type. Thereby, rich prompt information can be provided to enhance the prompting effect.

Exemplarily, the interactive operation prompt may specifically be text information, such as "I post a photo of scenery, too" in FIG. 2, which prompts the user to publish a picture comment through an interactive operation of inputting a picture.

Exemplarily, the preset control is configured to trigger the generation of the interactive information of the target media type. Thereby, users can more conveniently input interactive information of the target media type.

In some embodiments, after displaying the prompt information in the preset interactive area, the method further includes: in response to the preset control being triggered, entering a resource acquisition interface for the target media type; determining target media resources input by the user based on the resource acquisition interface; and generating the interactive information of the target media type from the target media resources. Thereby, the efficiency of generating interactive information can be improved.

Wherein, the resource acquisition interface may include a resource selection interface, a resource input interface, or a resource capture interface, etc., which may be determined according to the specific target media type.

For example, if the target media type is the first media type described above (requiring picture input), the user may trigger the preset control to enter a picture selection interface (e.g., displaying pictures from the user's local album for selection with the user's authorization) or a photo capture interface, etc.

In some embodiments, the displayed content of the preset control is associated with the target media type. Thereby, users can more intuitively learn the media type of the interactive information to be input. For example, if the target media type is the first media type (requiring picture input), the displayed content of the preset control may be an icon representing a picture. Alternatively, if the target media type is the third media type (requiring audio input), the displayed content of the preset control may be text or an icon representing voice (such as a microphone or sound spectrum, etc.).

In some embodiments, the interactive information of the target media type includes pictures and/or videos, and the displayed content of the preset control includes a preset picture and/or a target picture, which is associated with the target media content and/or the interactive information of the target media type of the target media content. Thereby, users can more intuitively learn that pictures and/or videos are to be input.

Where, the preset picture may be a pre-set fixed picture. For example, for different target media contents, the displayed content of the corresponding preset control includes the same preset picture. The target picture is associated with the target media content. For example, if the target media content is a picture, the target picture may be a thumbnail of the picture work; if the target media content is a video, the target picture may be a thumbnail of a video frame (e.g., the first video frame). The target picture is associated with the interactive information of the target media type of the target media content. The interactive information associated with the target picture may be determined according to a preset method, and the target picture may be a thumbnail of a picture included in the interactive information or a thumbnail of a video frame of a video included in the interactive information. The preset method may, for example, determine the interactive information of the target media type with a preset publication sequence number as the interactive information associated with the target picture (e.g., the first picture comment on the target media content or a comment whose interaction data meets a preset condition in the case of picture comments); alternatively, the preset method may determine the interactive information of the target media type recently viewed by the user as the interactive information associated with the target picture.

In some embodiments, presenting the prompt information in the preset interactive area includes: presenting initial prompt information in the preset interaction area, where display content of a preset control in the initial prompt information includes the preset picture; and switching, in response to presentation of the initial prompt information meeting a first preset requirement, from presenting the initial prompt information to presenting target prompt information in the preset interaction area, wherein display content of a preset control in the target prompt information includes the target picture. Thereby, the prompting effect can be further enhanced through changes in the pictures in the prompt information.

In some embodiments, the presentation of the initial prompt information meeting the first preset requirement includes: the presentation duration of the initial prompt information is longer than a preset duration threshold. For example, after the presentation duration of the initial prompt information exceeds 3 seconds, the presentation may switch to the target prompt information, that is, the display content in the preset control switches from the preset picture to the target picture.

In some embodiments, an input area for interaction information is displayed in the preset interaction area, and presenting the prompt information in the preset interaction area includes: presenting the prompt information in the input area. Thereby, when the user intends to input interactive information through the input area, the prompt can be more intuitively provided in the input area to enhance the prompting effect. Exemplarily, the input area may be an interactive information input box, such as a comment input box, generally located at the bottom of the preset interactive area.

In some embodiments, after presenting the prompt information in the input area, the method further includes: presenting, in response to an interaction information publication operation of a target media type by a current user, preset information in the input area, where the preset information is different from the prompt information. Thereby, when the user has published interactive information of the target media type, the display of the prompt information can be canceled. The preset information may, for example, be information presented in the input area when the target media content does not satisfy the preset condition.

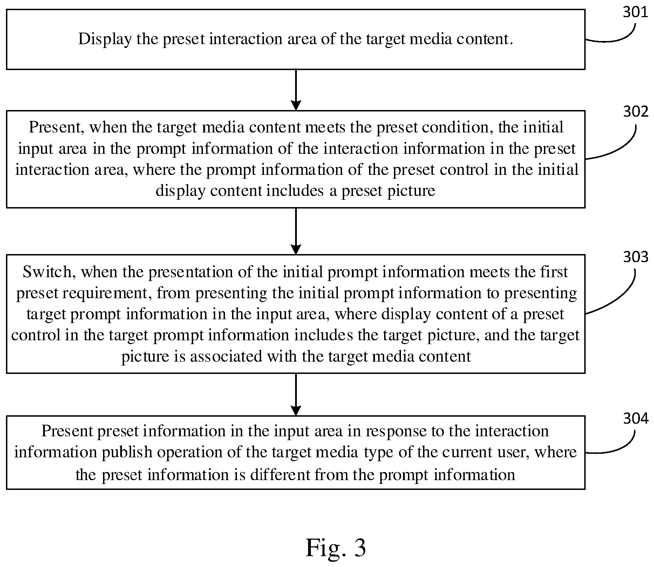

Fig. 3 is a schematic flow chart of an information presentation method provided by an embodiment of the present disclosure. The embodiment of the present disclosure is optimized based on various optional solutions in the above embodiments. Specifically, the method includes the following steps:
Step 301: display the preset interaction area of the target media content.

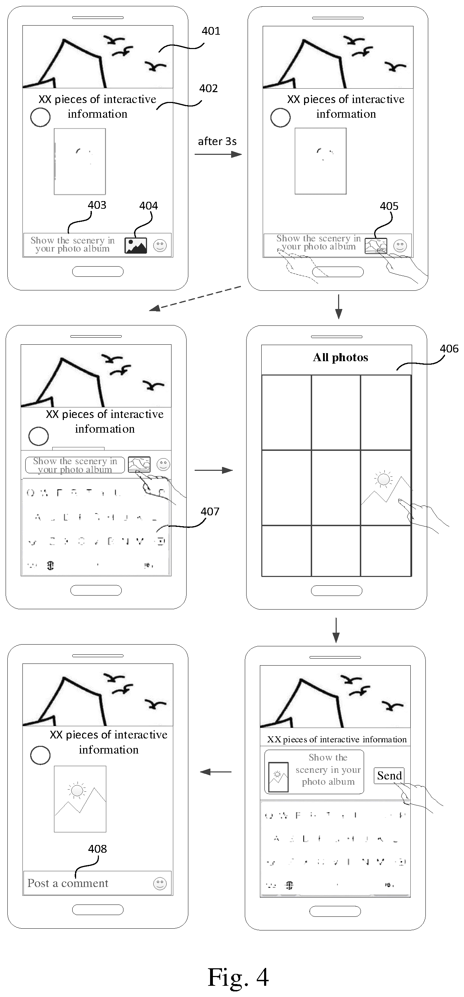

Fig. 4 is a schematic diagram of interface interaction provided by an embodiment of the present disclosure. As shown in Fig. 4, a preset interaction area 402 of the target media content 401 is displayed.

Step 302: present, when the target media content meets the preset condition, the initial input area in the prompt information of the interaction information in the preset interaction area, where the prompt information of the preset control in the initial display content includes a preset picture.

As shown in Fig. 4, when the target media content 401 satisfies the preset condition (e.g., the number of picture comments exceeds the corresponding preset quantity threshold), initial prompt information is displayed in the input area 403 of interactive information in the preset interactive area 402. The initial prompt information includes a target topic "Show the scenery in your photo album" and a preset control (referred to as the first preset control) 404 whose displayed content includes a preset picture.

Step 303: switch, when the presentation of the initial prompt information meets the first preset requirement, from presenting the initial prompt information to presenting target prompt information in the input area, where display content of a preset control in the target prompt information includes the target picture, and the target picture is associated with the target media content.

As shown in Fig. 4, after the presentation duration of the initial prompt information is greater than the preset duration threshold, such as after 3 seconds, the target prompt information is switched to be presented, and the preset control 404 whose displayed content includes the preset picture is switched to a preset control (referred to as the second preset control) 405 whose displayed content includes the target picture. The target picture is associated with the target media content 401, and may specifically be the cover of the target media content 401.

Step 304: present preset information in the input area in response to the interaction information publish operation of the target media type of the current user, where the preset information is different from the prompt information.

Exemplarily, in response to a trigger operation on a preset control, the target interface is entered, and the target interface may include a media resource acquisition interface (such as a shooting interface) and/or a media resource selection interface (such as a picture selection interface) associated with the target media type.). Target media resources are determined according to the user's operations based on the target interface. The to-be-published interactive information of the target media type is determined according to the target media resources. In response to the current user's publication operation of the to-be-published interactive information, the to-be-published interactive information is published, and preset information is displayed in the input area.

As shown in Fig. 4, after the user triggers the second preset control 405, the picture selection interface 406 may be entered. Alternatively, after the user triggers the target topic in the input area 403, an input control (such as the input panel 407 in the figure) may be displayed for text input. Meanwhile, the input area 403 still maintains the display of the second preset control 405, and triggering the second preset control 405 by the user may still enter the picture selection interface 406. When the user selects a picture in the picture selection interface 406, the selected picture is added to the input area. After the user triggers a preset publication control (such as the send button in the figure), the publication operation of the interactive information of the target media type is completed, and preset information 408 (such as "Post a comment") is displayed in the input area.

The information presentation method provided in the embodiments of the present disclosure presents publication prompt information of a target media type associated with a preset condition in the input area of a preset interactive area of target media content that satisfies the preset condition. The interactive information of the target media type includes pictures and/or videos, and the prompt information includes a preset control. The displayed content in the preset control can switch from a preset picture to a target picture associated with the target media content. Moreover, the display content in the input box is different before and after the current user publishes the interactive information of the target media type, which can further improve the interaction efficiency of users based on the interactive information of the target media type.

In some embodiments, presenting the prompt information in the preset interaction area includes: presenting, in response to a preset interaction operation by a current user on the interaction information of the target media type in the preset interaction area, the prompt information in the preset interaction area. As a result, the presentation timing of the prompt information may be determined more reasonably.

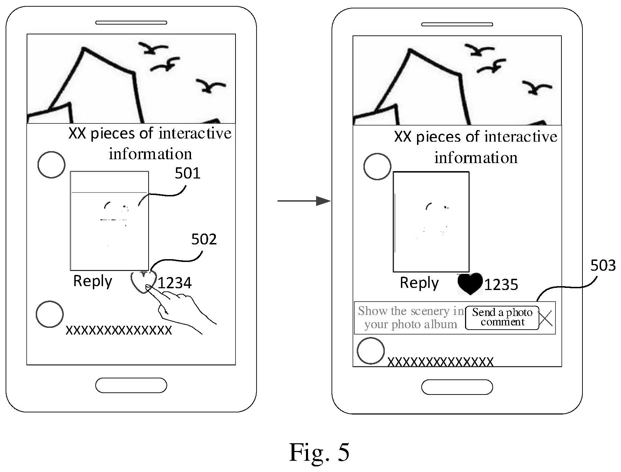

Exemplarily, the preset interaction operation may include, for example, a like operation, a favorite operation, a reply operation or a forward operation. Fig. 5 is a schematic diagram of another interface interaction provided by an embodiment of the present disclosure. As shown in Fig. 5, when the user triggers the like control 502 associated with the interaction information 501 of the target media type in the preset interaction area, it may be considered that the user inputs the preset interaction operation (like operation), and the prompt information 503 is presented in the preset interaction area. The prompt information 503 may include a target subject (such as "See the scenery in your photo album" in the figure) and a preset control (such as the "Send a photo comment" button in the figure).

In some embodiments, presenting the prompt information in the preset interaction area includes: presenting the prompt information at a target position in the preset interaction area, where the target position is associated with a presentation area of target interaction information in the preset interaction area. This allows the user to view the prompt information when browsing to the target position.

Exemplarily, one or more pieces of interaction information may be displayed in the preset interaction area, and the user may view more interaction information through gesture operations such as swipe operation, and the target interaction information may be, for example, the interaction information of the preset sequence number, such as the Xth piece of interaction information among the N pieces (total number) of interaction information of the target media content, and the target position may be, for example, below the presentation area of the target interaction information, or the right side of the presentation area of the target interaction information, or the upper layer of the presentation area of the target interaction information, etc., without specific limitation.

In some embodiments, the target interaction information includes interaction information of the target media type. As a result, the prompt information may be presented at the position associated with the presentation area of the interaction information of the target media type, further improving the prompt effect. Exemplarily, the target interaction information may be, for example, interaction information of a target media type of a preset sequence number, such as interaction information of the Yth target media type among M pieces (total number) of interaction information of target media types of the target media content.

In some embodiments, the target position is associated with the presentation area of the target interaction information in the preset interaction area includes: the presentation area of the target interaction information in the preset interaction area includes the target position. As a result, the presentation area of the target interaction information may be reused to display the prompt information, further improving the prompt effect.

In some embodiments, presenting the prompt information in the preset interaction area includes: presenting, in response to presentation of the target interaction information meeting a second preset requirement and/or an operation by a current user on the target interaction information meeting a third preset requirement, the prompt information in the presentation area of the target interaction information.

Exemplarily, the presentation of the target interaction information meets the third preset requirement. For example, the presentation duration of the target interaction information may be greater than the preset presentation duration threshold. For example, after 2 seconds of display, the prompt information is displayed within the presentation area of the target interaction information.; The current user's operation on the target interaction information meets the fourth preset requirement. For example, it may be that the current user has viewed the details of the target interaction information, such as viewing an enlarged view of the picture after clicking on a picture comment, or it may be that the current user interacts with the target information. Information input target interaction operation, such as like operation, etc.

In some embodiments, the preset interaction area comprises a display area of a preset interface, the preset interface is configured to present a target information stream, and the target information stream comprises interaction information of the target media type of the target media content. Therefore, when users enter a preset interface to view the target information stream of a target media type, they can see prompt information.

Exemplarily, the user may enter the preset interface by triggering the interaction information of a certain target media type, and may switch and view the interaction information of different target media types through swipe operation in the preset interface.

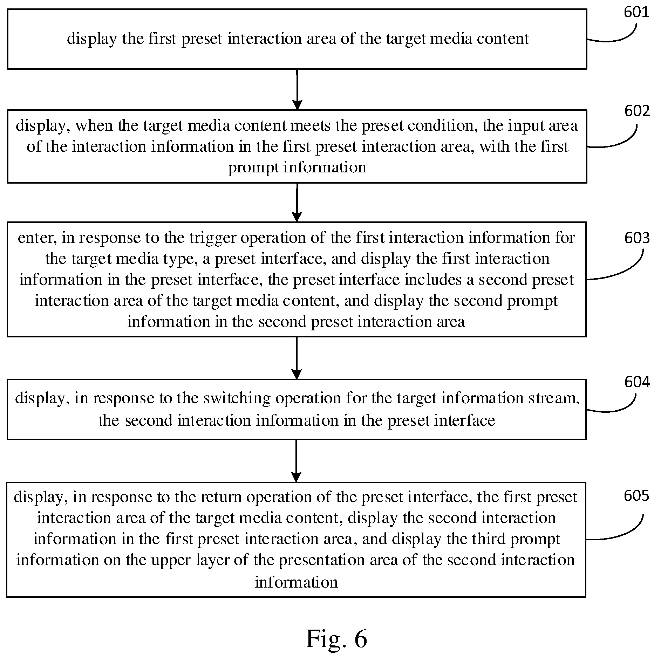

Fig. 6 is a schematic flowchart of another information presentation method provided by an embodiment of the present disclosure. The embodiment of the present disclosure is optimized based on various optional solutions in the above embodiments. Specifically, the method includes the following steps:
Step 601: display the first preset interaction area of the target media content.

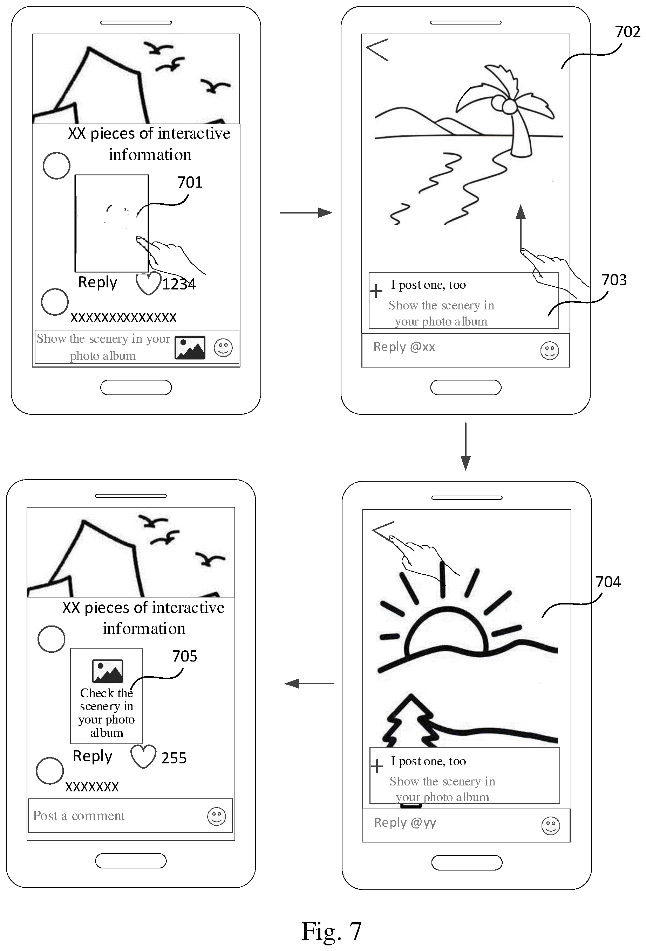

Fig. 7 is a schematic diagram of yet another interface interaction provided by an embodiment of the present disclosure. As shown in Fig. 7, the first preset interaction area is a comment panel area, which may be included in the content presentation interface.

Step 602: display, when the target media content meets the preset condition, the input area of the interaction information in the first preset interaction area, with the first prompt information.

As shown in Fig. 7, a first prompt information is displayed in the input area of the comment information in the comment panel area, the first prompt information includes a target subject and a preset control, and the control of the preset display content includes a preset picture.

Step 603: enter, in response to the trigger operation of the first interaction information for the target media type, a preset interface, and display the first interaction information in the preset interface, the preset interface includes a second preset interaction area of the target media content, and display the second prompt information in the second preset interaction area.

As shown in Fig. 7, after the user clicks the first interaction information 701, he enters the preset interface 702, and displays the target information stream in the preset interface 702, for example, displays an enlarged view of the first interaction information. The display area of the preset interface 702 may be regarded as the second preset interaction area, and the second prompt information 703 is displayed in the second preset interaction area, and the second prompt information 703 includes interaction operation prompts (I publish one, too) and the target subject.

Step 604: display, in response to the switching operation for the target information stream, the second interaction information in the preset interface.

Exemplarily, the user may switch to displaying an enlarged view of the picture in another piece of interaction information, such as the enlarged view 704 of the picture in the second interaction information, by inputting an upward swipe operation in the preset interface.

Step 605: display, in response to the return operation of the preset interface, the first preset interaction area of the target media content, display the second interaction information in the first preset interaction area, and display the third prompt information on the upper layer of the presentation area of the second interaction information.

As shown in Fig. 7, when the user exits the preset interface, the user returns to the content presentation interface, automatically positions the user in the first preset interaction area to display the second interaction information, and displays the third prompt information 705 on the upper layer of the presentation area of the second interaction information.

In the information presentation method provided by the embodiments of the present disclosure, for the target media content that meets the preset condition, when viewing different preset interaction areas, the user may display the release preset condition of the target media type associated with the prompt information in different forms., which may further improve the interaction efficiency of users based on the interaction information of the target media type.

In some embodiments, displaying the prompt information in the preset interaction area includes: displaying a target control in a preset area in the preset interaction area, where the target control includes the prompt information, and the target control is used to trigger the input of the interaction information of the target media type. Therefore, the target control containing the prompt information may be displayed preset area, so that the user may easily view the prompt information and at the same time quickly input the interaction information of the target media type by triggering the target control. Exemplarily, as shown in Fig. 2, the display area where the prompt information 203 is located is a preset area, and the prompt information 203 may be specifically included in a target control.

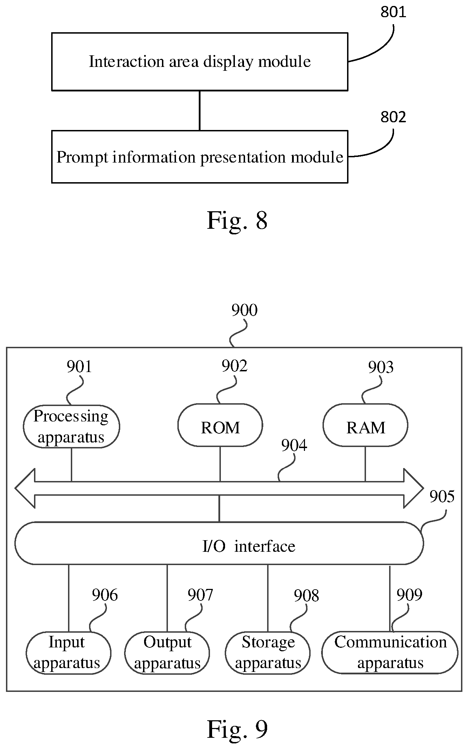

Fig. 8 is a schematic structural diagram of an information presentation apparatus provided by an embodiment of the present disclosure. As shown in Fig. 8, the apparatus includes:
The interaction area display module 801 is used to display a preset interaction area of the target media content, where the preset interaction area is configured to display and/or publish interaction information of the target media content;

The prompt information presentation module 802 is configured to present prompt information in the preset interaction area, wherein the prompt information is configured to prompt the publishing of interaction information of a target media type associated with a target topic, and the target topic comprises an associated topic of the target media content and/or an associated topic of the interaction information of the target media content.

The information presentation apparatus provided by the embodiment of the present disclosure prompts the release media content for releasing the interaction information of the target media type associated with the associated topic of the media content and/or the associated topic of the interaction information of the prompt information in a prompt information manner in the preset interaction area of the media content, which may improve the user's interaction efficiency based on the interaction information of the target media type.

Optionally, presenting the prompt information in the preset interaction area includes:
Present the prompt information in the preset interaction area when the target media content meets a preset condition.

Optionally, the target media type is associated with the preset condition.

Optionally, the target media content meets the preset condition includes: an amount of interaction information of the target media type of the target media content is greater than a preset number threshold.

Optionally, the target media type comprises at least one of a group consisting of: a first media type, a second media type, and a third media type, wherein interaction information of the first media type comprises a picture, interaction information of the second media type comprises a video, and interaction information of the third media type comprises an audio.

Optionally, the prompt information comprises at least one of a group consisting of: an interaction operation prompt, the target topic, and a preset control, wherein the preset control is configured to trigger and generate the interaction information of the target media type.

Optionally, the apparatus also includes:
A resource acquisition interface entry module, configured to enter, in response to the preset control being triggered, a resource acquisition interface of the target media type, after presenting the prompt information in the preset interaction area;
A resource obtaining module, configured to determine target media resources input by a user based on the resource acquisition interface; and
An interaction information generation module, configured to generate the interaction information of the target media type according to the target media resources.

Optionally, the associated topic of the interaction information of the target media content comprises an associated topic of interaction information of the target media type of the target media content.

Optionally, display content of the preset control is associated with the target media type.

Optionally, the interaction information of the target media type comprises a picture and/or a video, display content of the preset control comprises a preset picture and/or a target picture, and the target picture is associated with the target media content and/or the interaction information of the target media type of the target media content.

Optionally, presenting the prompt information in the preset interaction area comprises: presenting initial prompt information in the preset interaction area, wherein display content of a preset control in the initial prompt information comprises the preset picture; and switching, in response to presentation of the initial prompt information meeting a first preset requirement, from presenting the initial prompt information to presenting target prompt information in the preset interaction area, wherein display content of a preset control in the target prompt information comprises the target picture.

Optionally, the presentation of the initial prompt information meets the first preset requirement comprises: the presentation duration of the initial prompt information is longer than a preset duration threshold.

Optionally, an input area for interaction information is displayed in the preset interaction area, and the presenting the prompt information in the preset interaction area comprises: presenting the prompt information in the input area.

Optionally, the apparatus includes:
A preset information display module, configured to present, in response to an interaction information publication operation of a target media type by a current user, preset information in the input area, wherein the preset information is different from the prompt information.

Optionally, presenting the prompt information in the preset interaction area comprises: presenting, in response to a preset interaction operation by a current user on the interaction information of the target media type in the preset interaction area, the prompt information in the preset interaction area.

Optionally, presenting the prompt information in the preset interaction area comprises: resenting the prompt information at a target position in the preset interaction area, wherein the target position is associated with a presentation area of target interaction information in the preset interaction area.

Optionally, the target interaction information includes interaction information of the target media type.

Optionally, the target position is associated with the presentation area of the target interaction information in the preset interaction area comprises: the presentation area of the target interaction information in the preset interaction area comprises the target position.

Optionally, presenting the prompt information in the preset interaction area comprises: presenting, in response to presentation of the target interaction information meeting a second preset requirement and/or an operation by a current user on the target interaction information meeting a third preset requirement, the prompt information in the presentation area of the target interaction information.

Optionally, the preset interaction area comprises a display area of a preset interface, the preset interface is configured to present a target information stream, and the target information stream comprises interaction information of the target media type of the target media content.

Optionally, presenting the prompt information in the preset interaction area comprises: presenting a target control in a preset area of the preset interaction area, wherein the target control comprises the prompt information, and the target control is configured to trigger input of the interaction information of the target media type.

The information presentation apparatus provided by the embodiments of the present disclosure may execute the information presentation method provided by any embodiment of the present disclosure, and has corresponding functional modules and beneficial effects of the execution method.

It is worth noting that each unit and module included in the above device are only divided according to functional logic, but are not limited to the above division, as long as the corresponding function may be implemented; In addition, the specific names of each functional unit are only for the convenience of distinguishing each other, and are not used to limit the scope of protection of the embodiments of the present disclosure.

Fig. 9 is a schematic structural diagram of an electronic device provided by an embodiment of the present disclosure. Reference is made to Fig. 9 below, which illustrates a structural schematic diagram of an electronic device 900 suitable for implementing the embodiments of the present disclosure. The terminal device in the embodiment of the present disclosure may include, but is not limited to, a mobile terminal such as a mobile phone, a laptop, a digital broadcast receiver, a personal digital assistant (PDA), a tablet computer, a portable multimedia player (PMP), a vehicle-mounted terminal (such as a vehicle navigation terminal), and a fixed terminal such as a digital TV, a desktop computer, etc. The electronic device shown in Fig. 9 is only an example, and should not impose any limitation on the function and scope of use of the embodiments of the present disclosure.

As shown in Fig. 9, the electronic device 900 may include a processing apparatus (such as a central processing unit, a graphics processor, etc.) 901, which may perform various appropriate actions and processing according to a program stored in a read-only memory (ROM) 902 or a program loaded from the storage apparatus 908 into a random access memory (RAM) 903. The RAM 903 further stores various programs and data required for the operation of the electronic device 900. The processing apparatus 901, the ROM 902 and the RAM 903 are connected with each other through a bus 904. An input/output (I/O) interface 905 is also connected to the bus 904.

Generally, the following apparatuses may be connected to the I/O interface 905: an input apparatus 906 including, for example, a touch screen, a touch pad, a keyboard, a mouse, a camera, a microphone, an accelerometer, a gyroscope, etc.; an output apparatus 907 including, for example, a liquid crystal display (LCD), a speaker, a vibrator, etc.; a storage apparatus 908 including, for example, a magnetic tape, a hard disk, etc.; and a communication apparatus 909. The communication apparatus 909 may allow the electronic device 900 to perform wireless or wired communication with other devices to exchange data. Although Fig. 9 shows the electronic device 900 having various apparatuses, it should be understood that it is not required to implement or have all of the illustrated apparatuses. Alternatively, more or fewer apparatuses may be implemented or provided.

In particular, according to the embodiments of the present disclosure, the processes described above with reference to the flowcharts may be implemented as computer software programs. For example, an embodiment of the present disclosure includes a computer program product, which includes a computer program carried on a non-transitory computer-readable medium, and the computer program includes program codes for executing the methods shown in the flowcharts. In such an embodiment, the computer program may be downloaded and installed from a network through the communication apparatus 909, or installed from the storage apparatus 908, or installed from the ROM 902. When the computer program is executed by the processing apparatus 901, above functions defined in the methods of the embodiments of the present disclosure are executed.

The names of messages or information interacted between multiple apparatuses in the embodiments of the present disclosure are for illustrative purposes only and are not intended to limit the scope of these messages or information.

The electronic device provided in the embodiments of the present disclosure and the information presentation method provided in the above embodiments belong to the same inventive concept. Technical details not elaborated in this embodiment may be referred to in the above embodiments, and this embodiment has the same beneficial effects as the above embodiments.

The embodiments of the present disclosure provide a computer storage medium having a computer program stored thereon, and when the program is executed by a processor, the information presentation method provided in the above embodiments is implemented.

The embodiments of the present disclosure provide a computer program product including a computer program, and when the program is executed by a processor, the information presentation method provided in the above embodiments is implemented.

It should be noted that the above computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program that may be used by or in combination with an instruction execution system, apparatus or device. In the present disclosure, the computer-readable signal medium may include a data signal propagated in a baseband or as a part of a carrier wave, and computer-readable program codes are carried in the data signal. The data signal propagated in this manner may take many forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus or device. The program codes contained in the computer-readable medium may be transmitted by any suitable medium, including but not limited to: wire, optical cable, radio frequency (RF), etc., or any suitable combination thereof.

In some implementations, communication may be performed by client or server with any currently known or future developed network protocol such as the HyperText Transfer Protocol (HTTP), and may be interconnected with digital data communication (for example, communication network) of any form or medium. Examples of communication networks include a local area network ("LAN"), a wide area network ("WAN"), an inter-network (for example, the Internet), and a peer-to-peer network (for example, an ad hoc peer-to-peer network), and any currently known or future developed network.

The above computer-readable medium may be included in the above electronic device, or may exist alone without being assembled into the electronic device.

The above computer-readable medium carries one or more programs, and when the one or more programs are executed by the electronic device, the electronic device is caused to: displaying a preset interaction area of a target media content, where the preset interaction area is configured to display and/or publish interaction information of the target media content; and presenting prompt information in the preset interaction area, where the prompt information is configured to prompt the publishing of interaction information of a target media type associated with a target topic, and the target topic includes an associated topic of the target media content and/or an associated topic of the interaction information of the target media content.

The computer program codes for performing the operations of the present disclosure may be written in one or more programming languages or a combination thereof. The above programming languages include, but are not limited to, object-oriented programming languages such as Java, Smalltalk and C++, and also include conventional procedural programming languages such as "C" programming language or similar programming languages. The program codes may be executed entirely on a user's computer, partly on a user's computer, as a stand-alone software package, partly on a user's computer and partly on a remote computer, or entirely on a remote computer or a server. In the case of involving the remote computer, the remote computer may be connected to the user's computer through any kind of network, including a local area network (LAN) or a wide area network (WAN), or may be connected to an external computer (for example, connected via the Internet using an Internet service provider).

The flowcharts and block diagrams in the drawings illustrate the architecture, functions and operations of possible implementations of the system, method and computer program product according to various embodiments of the present disclosure. In this regard, each block in the flowcharts or block diagrams may represent a module, a program segment, or a portion of codes, and the module, the program segment, or the portion of codes contains one or more executable instructions for realizing specified logical functions. It should also be noted that, in some alternative implementations, the functions marked in the blocks may also occur in a different order from those marked in the drawings. For example, two blocks shown in succession may, in fact, be executed substantially in parallel, or may sometimes be executed in a reverse order, depending on the functions involved. It should also be noted that, each block in the block diagrams and/or flowcharts and the combination of blocks in the block diagrams and/or flowcharts may be implemented by a dedicated hardware-based system that performs the specified functions or operations, or may be implemented by a combination of dedicated hardware and computer instructions.

The units involved in the embodiments of the present disclosure may be implemented in software or hardware. The name of the module does not constitute a limitation on the module itself under certain circumstances. For example, the interaction area display module is further described to "a module of displaying a preset interaction area of a target media content, where the preset interaction area is configured to display and/or publish interaction information of the target media content".

The functions described above herein may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may include or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

According to one or more embodiments of the present disclosure, an information presentation method is provided, where the method includes: displaying a preset interaction area of a target media content, where the preset interaction area is configured to display and/or publish interaction information of the target media content; and presenting prompt information in the preset interaction area, where the prompt information is configured to prompt the publishing of interaction information of a target media type associated with a target topic, the target topic includes an associated topic of the target media content and/or an associated topic of the interaction information of the target media content.

According to one or more embodiments of the present disclosure, presenting the prompt information in the preset interaction area includes: presenting the prompt information in the preset interaction area when the target media content satisfies a preset condition.

According to one or more embodiments of the present disclosure, the target media type is associated with the preset condition.

According to one or more embodiments of the present disclosure, the target media content satisfies the preset condition includes: the amount of interaction information of the target media type of the target media content is greater than a preset number threshold.

According to one or more embodiments of the present disclosure, the target media type includes at least one of a group consisting of: a first media type, a second media type, and a third media type, where interaction information of the first media type includes a picture, interaction information of the second media type includes a video, and interaction information of the third media type includes an audio.

According to one or more embodiments of the present disclosure, the prompt information includes at least one of a group consisting of: an interaction operation prompt, the target topic, and a preset control, where the preset control is configured to trigger and generate the interaction information of the target media type.

According to one or more embodiments of the present disclosure, after presenting the prompt information in the preset interaction area, the method further includes: entering, in response to the preset control being triggered, a resource acquisition interface of the target media type; determining target media resources input by a user based on the resource acquisition interface; and generating the interaction information of the target media type according to the target media resources.

According to one or more embodiments of the present disclosure, the associated topic of the interaction information of the target media content includes an associated topic of interaction information of the target media type of the target media content.

According to one or more embodiments of the present disclosure, display content of the preset control is associated with the target media type.

According to one or more embodiments of the present disclosure, the interaction information of the target media type includes a picture and/or a video, display content of the preset control includes a preset picture and/or a target picture, and the target picture is associated with the target media content and/or the interaction information of the target media type of the target media content.

According to one or more embodiments of the present disclosure, presenting the prompt information in the preset interaction area includes: presenting initial prompt information in the preset interaction area, where display content of a preset control in the initial prompt information includes the preset picture; and switching, in response to presentation of the initial prompt information meeting a first preset requirement, from presenting the initial prompt information to presenting target prompt information in the preset interaction area, where display content of a preset control in the target prompt information includes the target picture.

According to one or more embodiments of the present disclosure, the presentation of the initial prompt information meeting the first preset requirement includes: the presentation duration of the initial prompt information is longer than a preset duration threshold.

According to one or more embodiments of the present disclosure, an input area for interaction information is displayed in the preset interaction area, and presenting the prompt information in the preset interaction area includes: presenting the prompt information in the input area.

According to one or more embodiments of the present disclosure, after presenting the prompt information in the input area, the method further includes: presenting, in response to an interaction information publication operation of a target media type by a current user, preset information in the input area, where the preset information is different from the prompt information.

According to one or more embodiments of the present disclosure, presenting the prompt information in the preset interaction area includes: presenting, in response to a preset interaction operation by a current user on the interaction information of the target media type in the preset interaction area, the prompt information in the preset interaction area.

According to one or more embodiments of the present disclosure, presenting the prompt information in the preset interaction area includes: presenting the prompt information at a target position in the preset interaction area, where the target position is associated with a presentation area of target interaction information in the preset interaction area.

According to one or more embodiments of the present disclosure, the target interaction information includes the interaction information of the target media type.

According to one or more embodiments of the present disclosure, the target position is associated with the presentation area of the target interaction information in the preset interaction area includes: the presentation area of the target interaction information in the preset interaction area includes the target position.

According to one or more embodiments of the present disclosure, presenting the prompt information in the preset interaction area includes: presenting, in response to presentation of the target interaction information meeting a second preset requirement and/or an operation by a current user on the target interaction information meeting a third preset requirement, the prompt information in the presentation area of the target interaction information.

According to one or more embodiments of the present disclosure, the preset interaction area includes a display area of a preset interface, the preset interface is configured to present a target information stream, and the target information stream includes interaction information of the target media type of the target media content.

According to one or more embodiments of the present disclosure, presenting the prompt information in the preset interaction area includes: presenting a target control in a preset area of the preset interaction area, where the target control includes the prompt information, and the target control is configured to trigger input of the interaction information of the target media type.

According to one or more embodiments of the present disclosure, an information presentation apparatus is provided, the apparatus includes: an interaction area display module configured to display a preset interaction area of a target media content, where the preset interaction area is configured to display and/or publish interaction information of the target media content; and a prompt information presentation module configured to present prompt information in the preset interaction area, where the prompt information is configured to prompt the publishing of interaction information of a target media type associated with a target topic, and the target topic includes an associated topic of the target media content and/or an associated topic of the interaction information of the target media content.

According to one or more embodiments of the present disclosure, an electronic device is provided, where the electronic device includes: one or more processors; and a storage apparatus configured to store one or more programs, where when the one or more programs are executed by the one or more processors, the one or more processors are caused to implement the information presentation method provided by embodiments of the present disclosure.

According to one or more embodiments of the present disclosure, a storage medium storing computer-executable instructions, where the computer-executable instructions, when executed by a computer processor, cause the computer processor to perform the information presentation method provided by embodiments of the present disclosure.

The above description is only preferred embodiments of the present disclosure and an illustration of the applied technical principles. Those skilled in the art should understand that the scope of disclosure involved in the present disclosure is not limited to the technical solutions formed by the specific combination of the above technical features, and should also cover other technical solutions formed by any combination of the above technical features or equivalent features thereof without departing from the above disclosed concept. For example, the technical solutions formed by replacing the above features with the technical features having similar functions disclosed in the present disclosure (but not limited to).

In addition, although operations are depicted in a particular order, this should not be understood as requiring that such operations are performed in the specific order shown or in a sequential order. Under certain circumstances, multitasking and parallel processing may be advantageous. Similarly, although several specific implementation details are included in the above discussion, these should not be interpreted as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. Rather, the specific features and actions described above are merely example forms of implementing the claims.

## Claims

1. An information presentation method, comprising:
displaying a preset interaction area of a target media content, wherein the preset interaction area is configured to display and/or publish interaction information of the target media content; and
presenting prompt information in the preset interaction area, wherein the prompt information is configured to prompt the publishing of interaction information of a target media type associated with a target topic, and the target topic comprises an associated topic of the target media content and/or an associated topic of the interaction information of the target media content.

2. The method according to claim 1, wherein presenting the prompt information in the preset interaction area comprises:
presenting the prompt information in the preset interaction area when the target media content meets a preset condition.

3. The method according to claim 2, wherein the target media type is associated with the preset condition.

4. The method according to claim 3, wherein the target media content meets the preset condition when an amount of interaction information of the target media type of the target media content is greater than a preset number threshold.

5. The method according to any one of claims 1-4, wherein the target media type comprises at least one of a group consisting of: a first media type, a second media type, and a third media type, wherein interaction information of the first media type comprises a picture, interaction information of the second media type comprises a video, and interaction information of the third media type comprises an audio.

6. The method according to any one of claims 1-5, wherein the prompt information comprises at least one of a group consisting of: an interaction operation prompt, the target topic, and a preset control, wherein the preset control is configured to trigger and generate the interaction information of the target media type.

7. The method according to claim 6, wherein after presenting the prompt information in the preset interaction area, the method further comprises:
entering, in response to the preset control being triggered, a resource acquisition interface of the target media type;
determining target media resources input by a user based on the resource acquisition interface; and
generating the interaction information of the target media type according to the target media resources.

8. The method according to claim 1, wherein the associated topic of the interaction information of the target media content comprises an associated topic of interaction information of the target media type of the target media content.

9. The method according to claim 6, wherein display content of the preset control is associated with the target media type.

10. The method according to claim 9, wherein the interaction information of the target media type comprises a picture and/or a video, display content of the preset control comprises a preset picture and/or a target picture, and the target picture is associated with the target media content and/or the interaction information of the target media type of the target media content.

11. The method according to claim 10, wherein presenting the prompt information in the preset interaction area comprises:
presenting initial prompt information in the preset interaction area, wherein display content of a preset control in the initial prompt information comprises the preset picture; and
switching, in response to presentation of the initial prompt information meeting a first preset requirement, from presenting the initial prompt information to presenting target prompt information in the preset interaction area, wherein display content of a preset control in the target prompt information comprises the target picture.

12. The method according to claim 11, wherein the presentation of the initial prompt information meets the first preset requirement comprises: the presentation duration of the initial prompt information is longer than a preset duration threshold.

13. The method according to claim 1, wherein an input area for interaction information is displayed in the preset interaction area, and the presenting the prompt information in the preset interaction area comprises:
presenting the prompt information in the input area.

14. The method according to claim 13, wherein after presenting the prompt information in the input area, the method further comprises:
presenting, in response to an interaction information publication operation of a target media type by a current user, preset information in the input area, wherein the preset information is different from the prompt information.

15. The method according to claim 1, wherein presenting the prompt information in the preset interaction area comprises:
presenting, in response to a preset interaction operation by a current user on the interaction information of the target media type in the preset interaction area, the prompt information in the preset interaction area.

16. The method according to claim 1, wherein presenting the prompt information in the preset interaction area comprises:
presenting the prompt information at a target position in the preset interaction area, wherein the target position is associated with a presentation area of target interaction information in the preset interaction area.

17. The method according to claim 16, wherein the target interaction information comprises the interaction information of the target media type.

18. The method according to claim 17, wherein the target position is associated with the presentation area of the target interaction information in the preset interaction area comprises: the presentation area of the target interaction information in the preset interaction area comprises the target position.

19. The method according to claim 18, wherein presenting the prompt information in the preset interaction area comprises:
presenting, in response to presentation of the target interaction information meeting a second preset requirement and/or an operation by a current user on the target interaction information meeting a third preset requirement, the prompt information in the presentation area of the target interaction information.

20. The method according to claim 1, wherein the preset interaction area comprises a display area of a preset interface, the preset interface is configured to present a target information stream, and the target information stream comprises interaction information of the target media type of the target media content.

21. The method according to claim 1, wherein presenting the prompt information in the preset interaction area comprises:
presenting a target control in a preset area of the preset interaction area, wherein the target control comprises the prompt information, and the target control is configured to trigger input of the interaction information of the target media type.

22. An information presentation apparatus, comprising:
an interaction area display module configured to display a preset interaction area of a target media content, wherein the preset interaction area is configured to display and/or publish interaction information of the target media content; and
a prompt information presentation module configured to present prompt information in the preset interaction area, wherein the prompt information is configured to prompt the publishing of interaction information of a target media type associated with a target topic, and the target topic comprises an associated topic of the target media content and/or an associated topic of the interaction information of the target media content.

23. The apparatus according to claim 22, further comprising: a module for performing the method according to any one of claims 2-21.

24. An electronic device, comprising:
one or more processors; and
a storage apparatus configured to store one or more programs,
wherein when the one or more programs are executed by the one or more processors, the one or more processors are caused to implement the information presentation method according to any one of claims 1-21.

25. A storage medium storing computer-executable instructions, wherein the computer-executable instructions, when executed by a computer processor, cause the computer processor to perform the information presentation method according to any one of claims 1-21.
